# EUROPÄISCHE PATENTSCHRIFT

(11) **EP 2 086 667 B1**
(45) Veröffentlichungstag und Bekanntmachung des Hinweises auf die Patenterteilung: **27.06.2012**
(21) Anmeldenummer: 07822146.2
(22) Anmeldetag: 01.11.2007
(51) Int. Cl.: A47J 31/44, B65D 85/804, B01F 3/04, B01F 3/08, B01F 5/00, B01F 5/02, B01F 5/04, B01F 5/06, B65D 85/73, B65D 85/80

(54) **AUFSCHÄUMEN FLÜSSIGER LEBENSMITTEL**
FROTHING LIQUID FOOD
MOUSSAGE D'ALIMENTS LIQUIDES

(30) Priorität: 10.11.2006 CH 18132006; 18.05.2007 CH 807072007
(43) Veröffentlichungstag der Anmeldung: 12.08.2009
(73) Patentinhaber: innostarter AG, 8050 Zürich (CH)
(72) Erfinder: KELLER, Beat, 8046 Zürich (CH)
(74) Vertreter: Troesch Scheidegger Werner AG
(86) Internationale Anmeldenummer: PCT/EP2007/061802
(87) Internationale Veröffentlichungsnummer: WO 2008/055845

(56) Entgegenhaltungen:
- WO-A-2005/063093
- WO-A-2006/043808
- GB-A- 717 784

## Beschreibung

Die vorliegende Erfindung betrifft ein Verfahren zur Herstellung eines wenigstens teilweise aufgeschäumten Lebensmittels, wie insbesondere von mindestens teilweise geschäumter Milch, eine Anordnung zum Erzeugen eines wenigstens teilweise aufgeschäumten Lebensmittels, ein kapselartiges Behältnis zum Erzeugen eines aufgeschäumten Lebensmittels, und schliesslich eine Kaffeemaschine mit einer Anordnung.

Die Kaffeeherstellung erfolgt je länger je mehr mittels so genannter Kapselsysteme. Dabei wird Kaffeepulver in Kapseln oder Beuteln verpackt in eine Kaffeemaschine eingelegt, die Kapsel mindestens teilweise zerstört und das Pulver mittels Heisswasser gelöst zur Ausgabe des Kaffees in gewünschter Form bzw. Zubereitungsart.

Falls Milch beispielsweise für einen Capuccino oder Milchkaffee benötigt wird, wird diese beispielsweise mittels Heissdampf erhitzt und aufgeschäumt bzw. gegebenenfalls weiter zum Aufschäumen mechanisch bearbeitet. Entsprechend wird in einer Vielzahl von Druckschriften die Zubereitung von Milchschaum mittels Heissdampf beschrieben. Beispielsweise wird in der EP 0 575 762, der EP 1 688 075, der WO01/88187, der W02005/074770, den US Patenten 4 735 133, 5 611 262, 5 473 972, 6 289 796 sowie der DE4035270 die Erzeugung eines Milchschaumes unter Verwendung von Heissdampf vorgeschlagen. Weiter schlägt die EP 0 919 776 vor, kalte Milch zusammen mit einem Luftstrom durch eine Düse zu verwirbeln um einen Milchschaum zu erzeugen. Für das Erhitzen wird wiederum die Verwendung von zusätzlichem Heissdampf vorgeschlagen.

Ein Vorschlag, wie Getränke aufgeschäumt werden Können, ohne die Verwendung von Heissdampf, is in der WO 2006/043808 A2 enthalten.

Schliesslich schlägt die EP 1 532 909 eine Vorrichtung zum Erzeugen von Milchschaum oder Milchschaumgetränken vor, wobei die Milch aus einer Art zusammendrückbarem Balg in der Art einer Ziehharmonika durch eine drehverstellbare Widerstandsdurchlassscheibe aufweisend Widerstandsdurchlasselemente getrieben wird. Der zusammendrückbare Balg ist dabei zweiteilig ausgebildet, aufweisend eine Luftkammer und eine Kammer beinhaltend Milch. Die drehverstellbare Widerstandsdurchlassscheibe zusammen mit den Widerstandsdurchlasselementen, welche aufgrund der Komplexität als zu reinigendes Mehrwegteil gedacht ist, ist dabei Teil einer Kaffeemaschine, in welche die zusammendrückbaren Kapseln einlegbar sind.

Entgegen der Kaffeezubereitung ist die Erzeugung eines Milchschaumes aufwendig und falls dieser mittels Heissdampf erzeugt wird, wird die Milch durch den Heissdampf teilweise verwässert und zudem werden die für das Erzeugen des Schaums benötigten Utensilien und Behältnisse verschmutzt.

Es ist eine Aufgabe der vorliegenden Erfindung eine Vereinfachung der Milchbearbeitung vorzuschlagen, um diese in wenigstens teilweiser Schaumform für die Herstellung, beispielsweise eines Capuccinos, eines Milchkaffees, etc., entsprechend zu behandeln, wobei eine Verschmutzung von Apparateteilen wie insbesondere einer Kaffeemaschine weitgehendst verhindert wird.

Verallgemeinert ist es eine Aufgabe der vorliegenden Erfindung ein Verfahren und eine Vorrichtung vorzuschlagen, um flüssige Lebensmittel auf einfache Art und Weise in wenigstens teilweise schaumartige Form zu bringen.

Die Erfindung wird mittels einem kapselartigen Gebilde nach Anspruch 1 sowie Verfahrens gemäss dem Wortlaut nach Anspruch 7 gelöst.

Vorgeschlagen wird, dass das flüssige Lebensmittel, welches wenigstens teilweise aufzuschäumen ist, in einem Behältnis, wie beispielsweise einer Kapsel oder einem Beutel vorgelegt wird, das flüssige Lebensmittel gegebenenfalls noch im Behältnis ohne Zufuhr von Heissdampf in das Behältnis erwärmt und anschliessend durch Erzeugung eines Druckes aus dem Behältnis ausgetrieben wird. Das aus dem Behältnis ausgetriebene Lebensmittel wird in eine Vorrichtung eingegeben, in welcher wenigstens teilweise eine turbulente Strömung erzeugt wird, um das flüssige Lebensmittel aufzuschäumen. Schliesslich wird das Lebensmittel aus dem Behältnis oder der Vorrichtung in gewünschter Form für die weitere Verwendung ausgegeben, wie beispielsweise um einen Capuccino herzustellen.

Das Austreiben der Flüssigkeit aus dem Behältnis kann einerseits durch Druckluft erfolgen, indem durch eine Öffnung im Behältnis Druckluft ins Innere gepresst wird, oder aber indem das Behältnis zusammengedrückt wird oder eine Wandung gegen das Innere hin verschoben wird. Dabei kann entweder eine düsenartige Öffnung in Folge der Druckluft automatisch geöffnet werden, das Öffnen kann durch Entfernen eines Schiebers, einer Membran, etc. Schrumpfen entweder der Oeffnung entlang einer Sollbruchstelle oder einer Membran.

Die ausgetriebene Flüssigkeit, welche beispielsweise im Falle einer Milch für die Erzeugung eines Capuccinos vorab beispielsweise mittels Mikrowelle, Infrarot, durch Zuführen von Heissdampf an das Behältnis, etc. erwärmt worden ist, wird in eine geeignete Vorrichtung eingegeben, wie beispielsweise eingespritzt, wie ein Trichter, ein Wirbelkörper, eine schlauchartige Vorrichtung, etc. um in dieser eine turbulente Strömung zu erzeugen zwecks Aufschäumen. Dabei ist wichtig, dass eine Verwirbelung mit der in der Vorrichtung vorhandenen Luft ermöglicht wird, zur wenigstens teilweisen Erzeugung eines Schaumes. Hierzu ist es auch möglich zusätzlich Luft von aussen in die Vorrichtung einzugeben, oder diese kann auch infolge der Strömung in der Vorrichtung selbsttätig angesogen werden.

Schliesslich wird die schaumartige Flüssigkeit, wie beispielsweise der Milchschaum, durch eine Ausgabeöffnung, wie beispielsweise eine Düse, ausgegeben, um beispielsweise in einer Kaffeetasse einen Capuccino zu erzeugen.

Weitere bevorzugte Ausführungsvarianten des erfindungsgemässen Verfahrens sind in abhängigen Ansprüchen charakterisiert.

Entsprechend vorgeschlagen wird eine Anordnung zum Erzeugen eines wenigstens teilweise aufgeschäumten Lebensmittels, wie insbesondere von aufgeschäumter Milch. Die Anordnung weist mindestens ein Behältnis auf, welches vorgesehen ist für das Vorlegen der aufzuschäumenden Flüssigkeit. Das Behältnis kann derart sein, dass entweder durch von aussen zugeführte Druckluft die Flüssigkeit ausgetrieben werden kann, oder aber die Wandungen sind derart, dass sie zusammengedrückt bzw. einwärts verschiebbar sind.

Weiter weist die Anordnung eine vorzugsweise mit dem Behältnis verbundene Vorrichtung auf, in welche die Flüssigkeit aus dem Behältnis einspritzbar bzw. eingebbar ist, und in welcher eine turbulente Strömung der Flüssigkeit erzeugbar ist bzw. die Flüssigkeit mit Luft wirbelartig durchmischt werden kann. Die Vorrichtung kann trichterartig sein, kann irgendwelche Strömungsblenden, Richtungsumkehrblenden, Verengungen im Durchfluss der Flüssigkeit, eine Luftzufuhr von aussen, etc. aufweisen, wesentlich ist, dass durch entsprechende Massnahmen die Flüssigkeit aufgeschäumt wird.

Gemäss einer Ausführungsvariante ist es möglich, das Behältnis integral mit der Vorrichtung zur Bildung einer einteiligen Kapsel zu verbinden.

Die Anordnung kann weiter ein Heizaggregat wie beispielsweise ein Mikrowelle, ein Infrarotaggregat, ein Heissdampferzeuger, etc. aufweisen um die Flüssigkeit im Behältnis vor dem Austreiben in die Vorrichtung zu erhitzen. Im Falle der Verwendung von Heissdampf ist es vorteilhaft, wenn dieser nicht mit dem flüssigen Lebensmittel in Kontakt gerät.

Schliesslich weist das Behältnis oder die Vorrichtung eine Ausgabeöffnung bzw. eine Ausgabedüse auf, durch welche das aufgeschäumte Lebensmittel, wie beispielsweise die aufgeschäumte Milch, austreibbar ist.

Bevorzugte Ausführungsvarianten der erfindungsgemässen Anordnung sind ebenfalls in abhängigen Ansprüchen charakterisiert.

Schliesslich vorgeschlagen wird eine Kaffeemaschine aufweisend eine Aufnahme, in welche die erfindungsgemässe Anordnung bzw. die oben erwähnte Kapsel eingegeben werden kann, und welche entsprechende Einrichtungen aufweist, um beispielsweise die Milch zu erhitzen, um Dampf oder Druckluft zu erzeugen, oder um mechanisch das Behältnis zusammenzudrücken, etc.

Der Vorteil einer derart erfindungsgemäss vorgeschlagenen Kaffeemaschine liegt darin, dass die Anordnung bzw. die Kapsel zum Erzeugen des Milchschaumes quasi autonom in die Kaffeemaschine eingegeben werden kann und nach Erzeugen des Milchschaumes wieder daraus entfernt werden kann, wie beispielsweise die heute bekannten und eingangs erwähnten Kaffeepulverkapseln bzw. -beutel. Dabei werden keine Teile der Kaffeemaschine in irgendeiner Art und Weise verschmutzt, lediglich die erfindungsgemässe Anordnung kann als Einweggebrauchsartikel entsorgt werden, wie beispielsweise kompostiert werden, falls die einzelnen Komponenten aus biologisch abbaubaren Materialien gefertigt sind.

Die Erfindung wird nun beispielsweise und unter Bezug auf die beigefügten Figuren näher erläutert.

Dabei zeigen:
- Fig. 1: schematisch im Querschnitt eine erfindungsgemässe Anordnung zum Erzeugen eines Milchschaumes,
- Fig. 2: schematisch anhand von Einzelteilen einer Anordnung einen Verschluss zum Verschliessen des Behältnisses,
- Fig. 3: schematisch in Perspektive eine Vorrichtung zum Erzeugen einer turbulenten Strömung zur Erzeugung des Schaumes,
- Fig. 4: einen horizontalen Schnitt durch die Milchaufschäumvorrichtung gemäss Fig. 3
- Fig. 5a,b: eine mögliche Ausführungsvariante eines Behältnisses für das Vorlegen der Flüssigkeit,
- Fig. 6: in Perspektive eine weitere Ausführungsvariante eines erfindungsgemässen Behältnisses,
- Fig. 7a,b: wiederum eine weitere Ausführungsvariante eines erfindungsgemässen Behältnisses bzw. einer Kapsel
- Fig. 8: schematisch eine weitere Ausführungsvariante einer erfindungsgemässen Anordnung zum Erzeugen eines Schaumes, wie eines Milchschaumes, und
- Fig. 9: ein konkretes Ausführungsbeispiel eines Gerätes zum Erzeugen von Milchschaum.

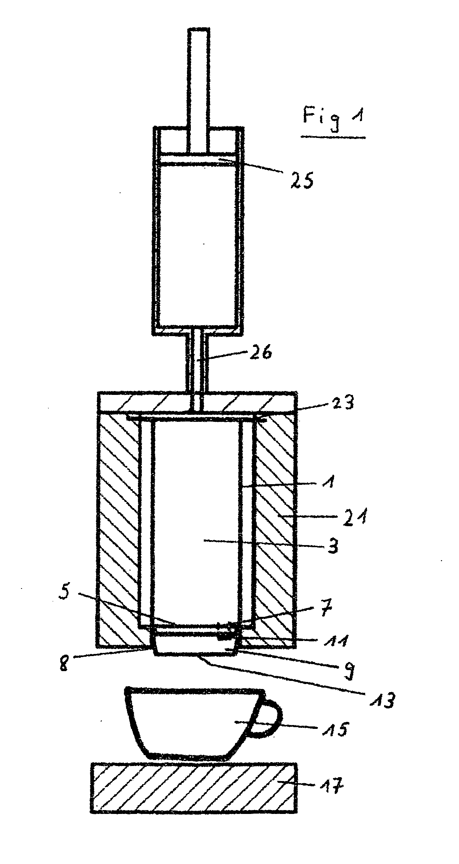

Figur 1 zeigt schematisch und im Querschnitt eine erfindungsgemässe Anordnung für das Erzeugen eines wenigstens teilweise schaumartigen Lebensmittels, wie insbesondere geschäumte Milch. Ein kapselartiges Behältnis 1, beispielsweise aufweisend einen oberen Rand 23 zum Halten des Behältnisses in einer entsprechenden Gehäuseaufnahme 21, beispielsweise einer Kaffeemaschine, enthält das aufzuschäumende flüssige Lebensmittel 3, wie beispielsweise Milch. Die unten abschliessende Wandung 5 kann gerade oder beispielsweise leicht trichterförmig ausgebildet sein mit einer vorderhand noch verschlossenen Öffnung 7, welche beispielsweise nicht mittig, sondern seitlich versetzt und schräg nach unten gerichtet ausgebildet sein kann. Unterhalb des Behältnisses 1 ist eine beispielsweise trichterartige Vorrichtung 9 vorgesehen, welche entweder integral fest mit dem Behältnis 1 verbunden ist oder aber ihrerseits beispielsweise mittels seitlicher Auskragungen in der Aufnahme 21 gehalten wird. Diese Vorrichtung 9 kann ebenfalls eine trichterartige Wandung 8 aufweisen, mündend in eine nach unten gerichtete Öffnung 13, welche beispielsweise düsenartig ausgebildet sein kann. Entlang der Innenseite der trichterförmigen Wandung 8 können beispielsweise Strömungsblenden 11 vorgesehen sein, auf deren Funktionsweise anschliessend eingegangen wird.

Unterhalb der Öffnung 13 kann eine Konsole 17 vorgesehen sein, welche zu einer Kaffeemaschine gehört, welche die Aufnahme 21 für das Behältnis 1 aufweist. Auf der Konsole 17 kann beispielsweise eine Kaffeetasse 15 angeordnet werden, in welcher bereits der heisse Kaffee vorhanden ist.

Schliesslich oberhalb des Behältnisses 1 kann eine kolbenartige Vorrichtung 25 vorgesehen sein, aufweisend eine Druckleitung 26 welche für das Eindrücken der Decke des Behältnisses 1 mittels beispielsweise Druck vorgesehen ist.

Nachfolgend nun die Funktionsweise der erfindungsgemässen Anordnung, wie dargestellt in Figur 1:

Nach Eingeben des Behältnisses 1 zusammen mit der Vorrichtung 9 in die Aufnahme 21, beispielsweise einer Kaffeemaschine, wird die Erzeugung des Milchschaumes, beispielsweise mittels eines Schalters oder Druckknopfes ausgelöst. Nun wird zunächst die Milch 3 im Behältnis 1 erhitzt, was beispielsweise mittels Mikrowelle, Infrarot oder einem anderen geeigneten Heizaggregat erfolgen kann. Das Erhitzen kann auch mittels Dampf erfolgen, welcher das Behältnis umströmt.

Nach Erwärmen der Milch wird der Kolben 25 betätigt, welcher die obere Wandung des Behältnisses 1 eindrückt und so einen gewissen Druck im Behältnis 1 erzeugt. Nun wird beispielsweise eine feine Membran an der Ausgabedüse 7 weggepresst, oder aber das Öffnen kann auf irgendeine andere geeignete Art und Weise automatisch erfolgen. Der heisse Milchstrahl wird in die trichterförmige Vorrichtung 9 eingespritzt, in welcher eine gewisse Verwirbelung der Milch erzeugt wird, beispielsweise infolge der Umlenkblenden 11. Der spiralförmige, schaumerzeugende Flüssigkeitsstrom in der trichterförmigen Vorrichtung 9 gelangt schliesslich zur Öffnung 13, durch welche die aufgeschäumte Milch in die darunter angeordnete Tasse 15 ausgegeben wird. Der Druckaufbau kann aber auch anstelle eines Kolbens bspw. mittels einer die obere Abdeckung des Behältnisses 1 durchstossende Druckdüse erfolgen.

Nach erfolgtem Ausgeben des Milchschaumes kann beispielsweise das Behältnis 1 mit der Vorrichtung 9 automatisch in ein entsprechend dafür vorgesehene Kammer ausgeworfen werden, oder aber kann manuell entfernt werden. Es versteht sich von selbst, dass keine Teile der Kaffeemaschine, aufweisend die Aufnahme 21, in irgendeiner Art und Weise mit Milch in Berührung gekommen sind. Somit entsteht keine Verschmutzung und die Kaffeemaschine muss nach erfolgtem Gebrauch nicht gereinigt werden.

Da zum Erwärmen der Milch und dem anschliessenden Erzeugen des Milchschaums kein Heissdampf verwendet wird, erfolgt auch keine Verwässerung der Milch im erzeugten Schaum.

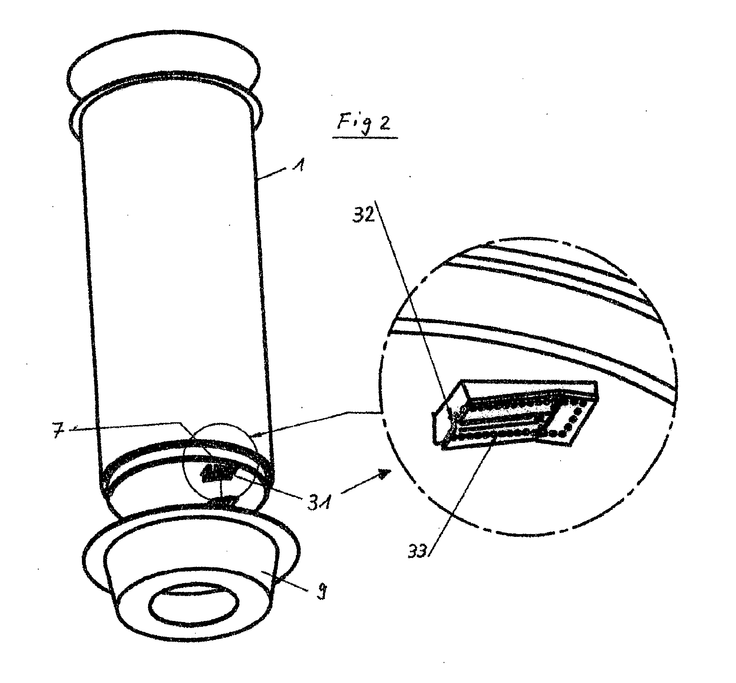

Figur 2 zeigt eine mögliche Ausführungsvariante eines erfindungsgemässen Behältnisses, aufweisend einen Verschlusskleber 31, welcher die Öffnung 7 verschliessend, am Behältnis 1 angeordnet ist. Der Verschlusskleber kann beispielsweise so angeordnet sein, dass er einerseits Sollbruchstellen 32 aufweist und entlang einer Seitenlinie 33 fest mit dem Behältnisboden verbunden ist, so dass auch beim Wegpressen des Klebers dieser nicht in die trichterartige Vorrichtung 9 gelangen kann. Der becherartige Trichter 9 kann entweder ein mit dem Behältnis 1 verbindbares getrenntes Bauteil sein, oder aber er kann integral mit dem Behältnis 1 zur Bildung einer einteiligen Kapsel verbunden sein.

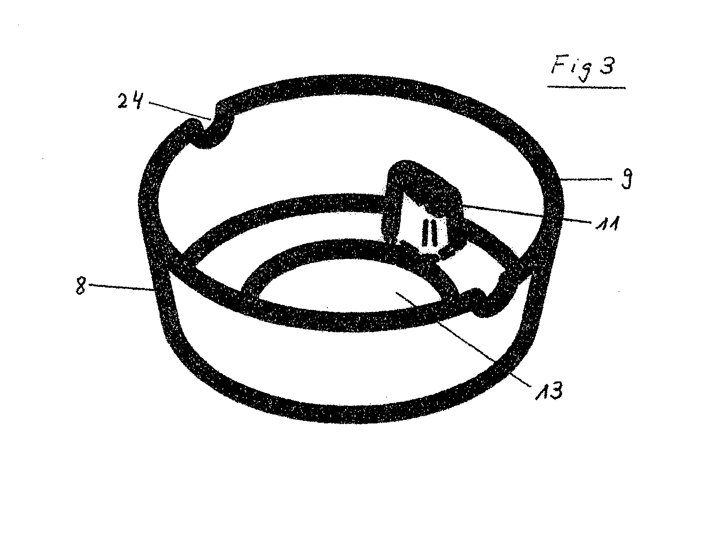

Figur 3 zeigt eine mögliche Ausführungsvariante einer trichterartigen Vorrichtung 9, aufweisend eine kragenartig trichterartige Wandung 8 sowie eine Ablenkblende 11, gegen welche die heisse flüssige Milch durch die Düse 7 gespritzt werden kann. Durch die relativ hohe Geschwindigkeit der rotierenden Milch wird entsprechend durch die Öffnung 13 Luft von unten angesogen, womit eine gewisse Verwirbelung der Milch entsteht und somit als Produkt Milchschaum. Dieser wird schliesslich ebenfalls durch die Öffnung 13 nach unten ausgegeben. Damit die Vorrichtung gegebenenfalls zusammen mit dem Behältnis positionsrichtig in der Aufnahme 21 gehalten wird, ist es möglich beispielsweise sogenannte Positionierungshilfen 24 vorzusehen.

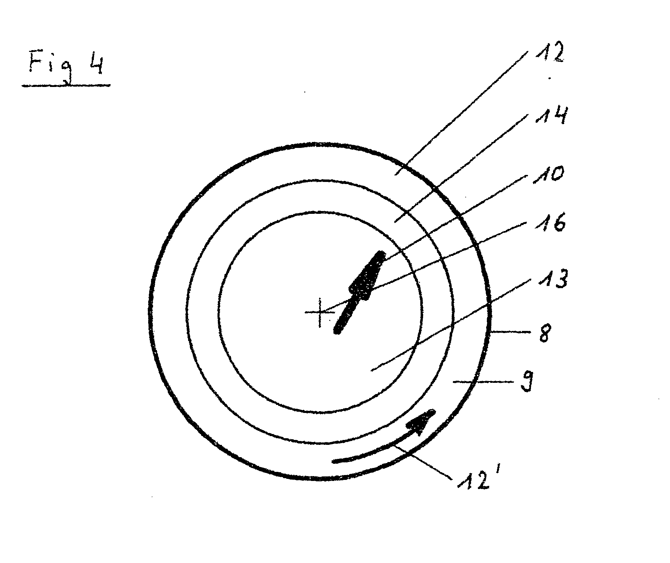

Figur 4 zeigt einen horizontalen Schnitt durch eine Milchaufschäumeinheit analog derjenigen dargestellt in Figur 3. Dabei wird die Milch in einem scharfen Strahl in Pfeilrichtung 10 mit einer tangentialen Komponente in die Ringkammer 12 der Vorrichtung 8 eingedüst. Es ergibt sich eine rotierende Milchschicht, wobei die Milch durch die heftigen Turbulenzen des eintreffenden Strahls eine erste Aufschäumung erfährt. Dabei erfolgt die Rotation in Pfeilrichtung 12' um das Rotationszentrum 16 der Vorrichtung 9 aufweisend beispielsweise eine trichterartige Wandung 8. Bei dieser Art der Aufschäumung entsteht ein anfänglich recht grossporiger und instabiler Schaum der bei weiteren Durchgängen durch den Milchstrahl zerschlagen wird und so entsteht der gewünschte feinporige stabile Schaum 14. Die dazu notwendige Luft wird durch die Austrittsöffnung 13 angesaugt.

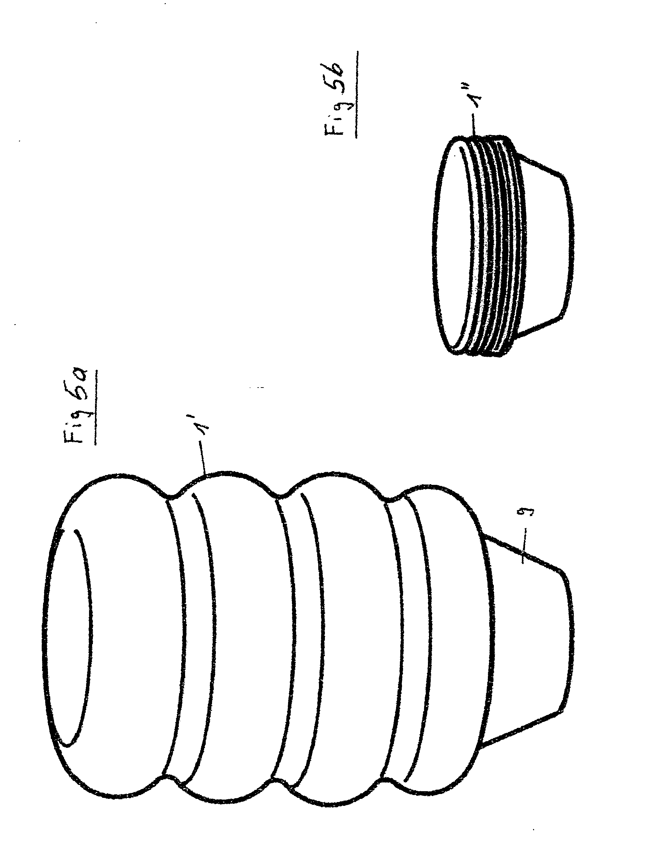

Figuren 5a und 5b zeigen eine weitere mögliche Ausführungsvariante eines erfindungsgemässen Behältnisses, beispielsweise in Form eines Balges ausgebildet. Dabei zeigt Figur 5a das Behältnis 1', aufgesetzt auf der trichterförmigen Vorrichtung 9 in Ausgangsposition, enthaltend die Flüssigkeit, wie beispielsweise Milch. In Figur 5b ist das balgartige Behältnis zusammengedrückt und mit dem Bezugszeichen 1" bezeichnet dargestellt. Durch diese balgartige Ausbildung des Behältnisses ist dieses leicht durch Anlegen von Druck oder mittels eines kolbenartigen Instrumentes zusammendrückbar.

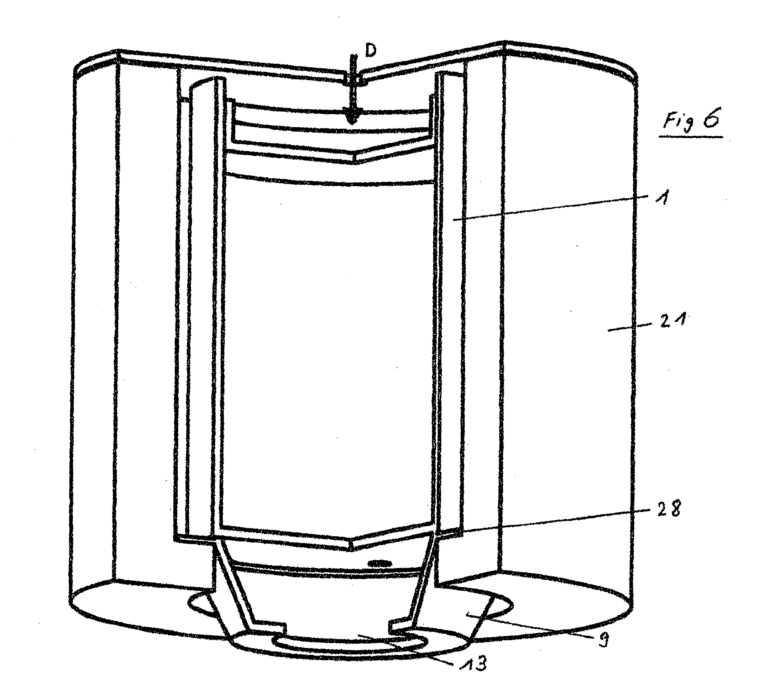

Figur 6 zeigt wiederum in Perspektive eine weitere Ausführungsvariante eines erfindungsgemässen becherartigen Behältnisses 1, aufgesetzt auf einer trichterförmigen Vorrichtung 9. Dabei weist die trichterartige Vorrichtung 9 einen oberen Haltering 28 auf, welcher vorgesehen ist um den Becher 1 in einer entsprechenden Aufnahme 21, beispielsweise in einer Kaffeemaschine, positionsrichtig anzuordnen. Durch Anlegen von Druckluft D kann wiederum die Milch aus dem Becher 1 in die trichterförmige Vorrichtung 9 getrieben werden, wo der Schaum erzeugt wird. Schliesslich gelangt der Milchschaum durch die Öffnung 13, um beispielsweise in eine Kaffeetasse ausgegeben zu werden.

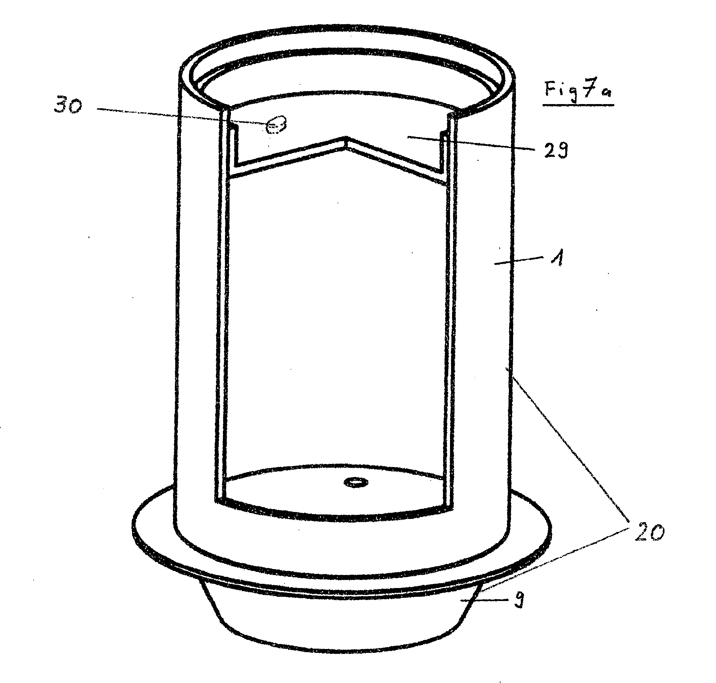

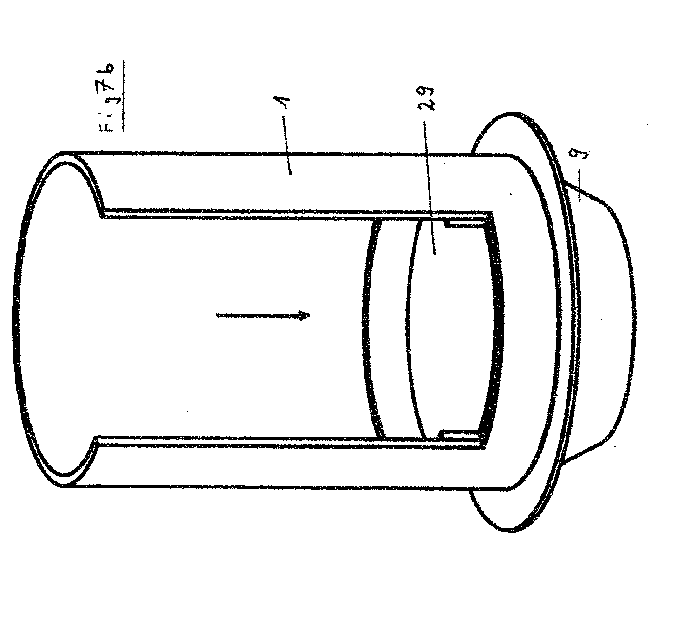

In den Figuren 7a und 7b ist wiederum eine weitere Ausführungsvariante eines erfindungsgemässen Bechers 1 dargestellt, aufweisend eine bspw. als Kolben ausgebildete obere Wandung 29, welche durch Anlegen eines entsprechenden Werkzeuges entlang der Wandung eingedrückt werden kann, dargestellt. Mit anderen Worten ist der Becher 1 kartuschenartig ausgebildet, und kann, wie in den vorangehenden Beispielen direkt integral mit der trichterförmigen Vorrichtung 9 zur Bildung einer einteiligen Kapsel 20 verbunden sein, in welcher die Verwirbelung der ausgetriebenen Milch erfolgen kann. Anstelle einer kolbenartigen oberen Wandung kann aber auch eine fest angeordnete membranartige Wandung vorgesehen sein, welche mittels einer düsen- oder stiftartigen Einrichtung bspw. in einem Bereich 30 (gestrichelt dargestellt) durchstossbar ist, um den Druck im inneren 2 des oberen Behältnissbereiches aufzubauen.

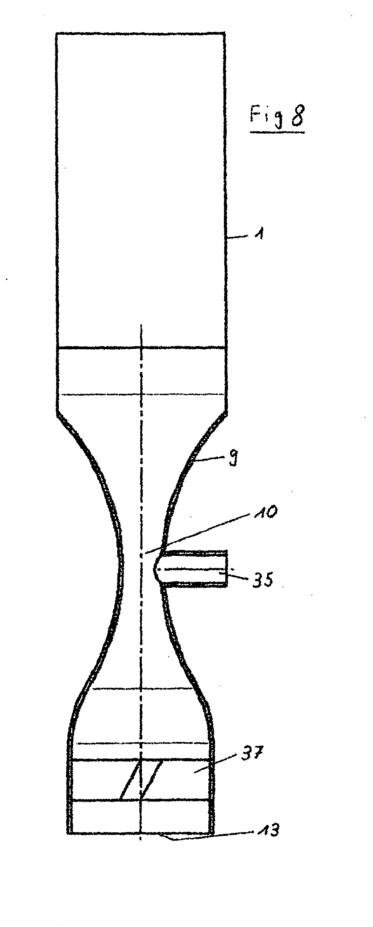

Figur 8 zeigt schematisch im Schnitt eine andersartige Ausführung der erfindungsgemässen Anordnung, indem hier der Becher nicht auf einer trichterförmigen Anordnung 9 aufgesetzt ist, sondern mit einem venturirohrartig ausgebildeten schaumbildenden Körper 9 verbunden bzw. auf diesen aufgesetzt ist. Dabei ist ein kanalförmiger Durchgang 10 vorgesehen mit verjüngtem Querschnitt, in welchen ein seitliches Luftrohr 35 mündet, zum Einführen von Luft, Dampf oder Druckluft. Infolge der erhöhten Durchtrittsgeschwindigkeit der vom Becher 1 ausgetriebenen Milch wird seitlich Luft angesogen, und in nachfolgend angeordnetem Verwirbelungskörper 37, wie beispielsweise einen sogenannten Drallkörper, wird der eigentliche Milchschaum gebildet. Schliesslich wird dieser wiederum durch die Öffnung 13 nach unten, beispielsweise in eine Kaffeetasse, ausgegeben.

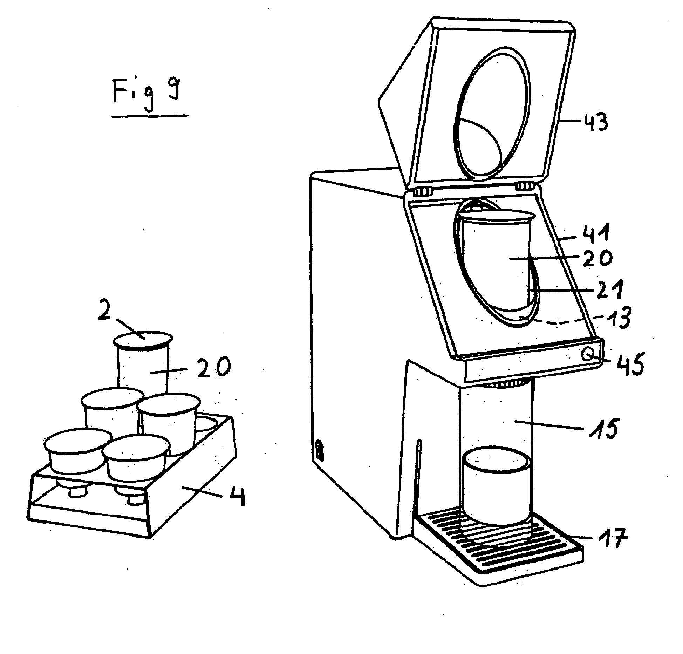

Figur 9 zeigt schliesslich ein Gerät 41 zum Erzeugen eines Milchschaumes, beispielsweise einen Cappuccino, einen Kaffee Latte Macchiato, etc.. In eine entsprechende Aufnahme 21 wird ein Milch enthaltende Kapsel 20 eingegeben, worauf ein Deckel 23 auf die obere Öffnung des Kapsel 20 heruntergeklappt wird. Im so nun verschlossenen Aufnahmeraum 21 wird durch betätigen mittels eines Schalters 45 zunächst die Milch in der Kapsel 20 erwärmt und anschliessend beispielsweise mittels eines verschieblichen Kolbens oder durch Erzeugen von Druck oder durch Eingeben von Druckluft in die Kapsel die Milch aus dem Behältnisbereich in den Strömungsbereich ausgetrieben. Das Austreiben erfolgt analog den Beschreibungen wie angeführt unter Bezug auf die Figuren 1 und folgende, wobei die für das Erzeugen des Milchschaums verantwortliche Vorrichtung bzw. der trichterartige Becher integral mit dem Behältnisbereich zur Bildung der Kapsel verbunden ist. Der nun erzeugte Schaum wird in das Behältnis 15 wie eine Tasse oder ein Becher enthaltend einen Kaffee eingedüst zur Erzeugung des entsprechend gewünschten Kaffees.

Je nach herzustellendem Kaffee, ob Cappuccino, ein Milchkaffe, ein Kaffee Latte Macchiato, etc. kann eine entsprechende Kapsel 20 aus einem Ständer 4 ausgewählt werden, welche Kapsel 20 zunächst noch durch einen entsprechenden Deckel 2 verschlossen ist. Der Verschluss 2 kann entweder vor dem Eingeben in das Gerät 41 entfernt werden, oder aber muss für die Erzeugung des Milchschaums nicht entfernt werden.

Vorzugsweise handelt es sich bei dem Behältnis bzw. der Kapsel 20 (Behältnis 1 + trichterförmige Vorrichtung 9 integral miteinander verbunden) um ein Wegwerfgebinde, welches möglichst kostengünstig zu sein hat. Das heisst, dass das Behältnis bzw. die Kapsel möglichst in einem kostengünstigen Herstellverfahren wie beispielsweise mittels Tiefzugverfahren herstellbar sein sollte. Das Behältnis bzw. die Kapsel kann entweder aus einem Polymermaterial gefertigt sein, oder aber aus Aluminium oder einem andere geeigneten Material, welches nach Gebrauch rezyklisiert werden kann.

Aus den in den Figuren 1 bis 9 dargestellten Ausführungsbeispielen handelt es sich selbstverständlich nur um Ausführungsvarianten zur Erläuterung der vorliegenden Erfindung. Keinesfalls ist die Erfindung auf die Ausführungen limitiert und selbstverständlich können irgendwelche andersartige Behältnisse für das Vorlegen der Milch gewählt werden, wie auch andere Ausführungsformen für die Herstellung des Milchschaumes.

Wie eingangs erwähnt ist auch die vorliegende Erfindung keinesfalls auf die Herstellung eines Milchschaumes limitiert, sondern die erfindungsgemäss vorgeschlagenen Verfahren wie auch Vorrichtungen können generell für das Herstellen eines Schaumes aus einem flüssigen Lebensmittel verwendet werden.

Der grosse Vorteil der erfindungsgemässen Anordnung bzw. der Verfahren liegt, wie bereits oben erwähnt darin, dass auf einfachste Art und Weise ein Schaum erzeugt werden kann, ohne dass die Umgebung in irgendeiner Art und Weise verschmutzt wird. Der Aufwand zur Schaumerzeugung wie auch das Reinigen und das Entsorgen der diversen Behältnisse bzw. Kapsel ist äusserst einfach.

## Patentansprüche

1. Kapselartiges Gebilde (20) zum Heissdampf-freien Erzeugen eines wenigstens teilweise aufgeschäumten flüssigen Lebensmittels wie insbesondere Milch, mit:
- mindestens einen Bereich (1) vorgesehen für die Lagerung eines flüssigen Lebensmittels (3),
- mindestens einen weiteren Bereich (9) um das flüssige Lebensmittel aufzuschäumen, wobei die beiden Bereiche voneinander trennbar sind, derart, dass die Trennung wenigstens zum Teil mechanisch oder auf Druck aus dem einen Bereich unterbrechbar ist, um das flüssige Lebensmittel zum Aufschäumen in den weiteren Bereich zu treiben, und
- mindestens ein Ausgabeorgan (13) am weiteren Bereich um das aufgeschäumte Lebensmittel auszugeben, **gekennzeichnet dadurch,**
- **dass** die Trennung derart ausgebildet ist, dass das flüssige Lebensmittel derart in den weiteren Bereich eingegeben wird, dass es aufschäumt.

2. Kapselartiges Gebilde nach Anspruch 1, **dadurch gekennzeichnet, dass** im weiteren Bereich Mittel vorgesehen sind, um das vom einen Bereich eingegebene flüssige Lebensmittel derart in eine turbulente Strömung zu versetzen, dass es aufschäumt.

3. Gebilde nach Anspruch 2, **dadurch gekennzeichnet, dass** die Mittel trichterartig und/oder becherförmig ausgebildet sind, aufweisend entlang der inneren Oberfläche Strömungsblenden (11, 37), Prallnocken, etc. für das Erzeugen der turbulenten Strömung bzw. zum Aufschäumen der Flüssigkeit.

4. Gebilde nach einem der Ansprüche 1 bis 3, **dadurch gekennzeichnet, dass** der eine Bereich leicht deformierbar bzw. zusammendrückbar ausgebildet ist und eine Ausgabeöffnung (7) aufweist, welche durch Erzeugen eines Druckes im Behältnis selbsttätig geöffnet wird.

5. Kapselartiges Gebilde nach einem der Ansprüche 1 bis 3, **dadurch gekennzeichnet, dass** im einen Bereich mindestens eine Wandung durch äusseren Druck verschiebbar ist oder mittels einer Düse durchstossbar ist derart, dass im einen Bereich ein erhöhter Druck erzeugbar ist.

6. Kapselartiges Gebilde nach einem der Ansprüche 1 bis 5, **dadurch gekennzeichnet, dass** es sich um ein Einweggebinde bzw. um einen Wegwerfartikel handelt, welcher bspw. mittels Tiefzugverfahren herstellbar ist.

7. Verfahren zur Herstellung eines mindestens teilweise geschäumten Lebensmittels, unter Verwendung eines kapselartigen Gebildes nach einem der Ansprüche 1 bis 6, wie insbesondere von mindestens teilweise geschäumter Milch oder eines Milchproduktes, **dadurch gekennzeichnet, dass** das im einen Bereich gehaltene flüssige Lebensmittel aus dem Bereich ausgetrieben wird und ohne Zufuhr von Heissdampf wie insbesondere Wasserdampf durch Erzeugen einer mindestens teilweise turbulenten Strömung wenigstens teilweise aufgeschäumt und anschliessend ausgegeben wird.

8. Verfahren nach Anspruch 7, **dadurch gekennzeichnet, dass** der Bereich mit dem flüssigen Lebensmittel ohne Zufuhr von Dampf ins Behältnis erhitzt wird, bzw. das darin enthaltene flüssige Lebensmittel, anschliessend das erhitzte gegebenenfalls aufgeschäumte Lebensmittel ausgetrieben, wenigstens teilweise aufgeschäumt und anschliessend ausgegeben wird.

9. Verfahren nach einem der Ansprüche 7 oder 8, **dadurch gekennzeichnet, dass** das flüssige Lebensmittel, wie insbesondere die Milch, mittels Mikrowelle, Infrarot oder dgl. im einen Bereich erwärmt wird.

10. Verfahren nach einem der Ansprüche 7 bis 9, **dadurch gekennzeichnet, dass** das flüssige Lebensmittel aus dem einen Bereich mittels Druckluft, durch Eindrücken oder durch Verschieben einer Wandung gegen das Innere des Bereiches zum Erzeugen eines Überdruckes ausgetrieben wird, und anschliessend gegebenenfalls das Aufschäumen in einem, mit dem einen Bereich verbundenen weiteren Bereich erfolgt.

11. Verfahren nach einem der Ansprüche 7 bis 10, **dadurch gekennzeichnet, dass** das flüssige Lebensmittel derart in einen trichterartigen oder becherartigen weiteren Bereich eingegebenen wird, dass eine wenigstens nahezu spiral- oder kreisförmige Strömung entsteht, wobei die Turbulenz durch asymmetrisches Einspritzen des flüssigen Lebensmittels und/oder durch das Anordnen von Blenden, Verwirbelungskörpern und dgl. im weiteren Bereich erfolgt.

12. Verfahren nach einem der Ansprüche 7 bis 11, **dadurch gekennzeichnet, dass** das flüssige Lebensmittel wie insbesondere Milch in einem scharfen Strahl mit einer tangentialen Komponente in den becherartigen weiteren Bereich eingedüst wird, wodurch sich eine rotierende Flüssigkeitsschicht wie Milchschicht ergibt, wodurch die Flüssigkeit durch die heftigen Turbulenzen des eintreffenden Strahles eine erste Aufschäumung erfährt, bei dieser Art von Aufschäumung ein anfänglich recht grossporiger und instabiler Schaum entsteht, der bei weiteren Durchgängen durch den Flüssigkeitsstrahl zerschlagen wird, wodurch so der gewünschte feinporige stabile Schaum entsteht.

13. Verfahren nach einem der Ansprüche 7 bis 12, **dadurch gekennzeichnet, dass** das flüssige Lebensmittel in einen weiteren Bereich eingespritzt wird, aufweisend in Fliessrichtung des Lebensmittels unterschiedliche Querschnitte zur Erzeugung einer turbulenten Strömung und dass gegebenenfalls in Bereichen mit verjüngtem Querschnitt eine Luftzufuhr von aussen erfolgt zur Verwirbelung des Lebensmittels.

14. Verfahren nach einem der Ansprüche 10 bis 13, **dadurch gekennzeichnet, dass** die Schaumerzeugung im weiteren Bereich mittels sogenannter Wirbel- oder Drallkörper erfolgt, welche gegebenenfalls frei beweglich bzw. frei rotierbar angeordnet sind.

15. Anordnung für die Durchführung des Verfahrens, nach einem der Ansprüche 7 bis 14, zum Erzeugen eines wenigstens teilweise aufgeschäumten flüssigen Lebensmittels, wie insbesondere Milch, **gekennzeichnet durch**
- ein Behältnis (1), vorgesehen für die Lagerung eines flüssigen Lebensmittels (3),
- eine Vorrichtung (25) zum Austreiben der Flüssigkeit aus dem Behältnis,
- eine Strömungsvorrichtung (9), in welcher die ausgetriebene Flüssigkeit in eine wenigstens teilweise turbulente Strömung versetzt wird, und
- ein Ausgabeorgan (13) zum Ausgeben des wenigstens teilweise schaumförmigen Lebensmittels.

16. Anordnung nach Anspruch 15, **dadurch gekennzeichnet, dass** die Strömungsvorrichtung trichterartig und/oder becherförmig ausgebildet ist, aufweisend entlang der inneren Oberfläche Strömungsblenden (11, 37), Prallnocken, etc. für das Erzeugen der turbulenten Strömung bzw. zum Aufschäumen der Flüssigkeit.

17. Anordnung nach einem der Ansprüche 15 oder 16, **dadurch gekennzeichnet, dass** das Behältnis (1), die Strömungsvorrichtung (9) sowie das Ausgabeorgan (13) zur Bildung eines kapselartigen Gebildes (2) integral verbunden sind, welches kapselartige Gebilde wieder lösbar in der Anordnung platzierbar ist.

18. Kaffeemaschine mit einer Anordnung nach einem der Ansprüche 15 bis 17.

19. Kaffeemaschine nach Anspruch 18 zum Erzeugen bzw. Ausgeben, insbesondere von portionierten Kaffees, in den unterschiedlichsten Konsumationsformen, aufweisend eine Aufnahme für Kaffeepulver bzw. Pulver in portionierter Form, eine Heizvorrichtung zum Erzeugen von Heisswasser sowie eine Mischvorrichtung um das Kaffeepulver mit Heisswasser zu vermischen und ein Ausgabeorgan für die Ausgabe des gebrühten Kaffeepulvers, gekennzeichnet weiter durch
- eine Aufnahme (21) für das Anordnen des kapselartigen Gebildes (20) (3) nach einem der Ansprüche 1 bis 7, enthaltend flüssige Milch,
- ein Heizorgan zum Erhitzen der Milch,
- eine Einrichtung zum Austreiben der Milch aus dem einen Bereich zum Erzeugen einer wenigstens teilweise turbulenten Strömung der Milch um diese aufzuschäumen oder zum Austreiben des Schaumes aus dem kapselartigen Gebilde, sowie
- ggf. eine Ausgabeöffnung (13) für die Ausgabe der aufgeschäumten Milch.

## Claims

1. Capsule-type structure (20) for producing without superheated steam an at least partially frothed liquid food such as in particular milk, with:
- at least one section (1) provided for the storage of a liquid food (3),
- at least one further section (9) for frothing the liquid food, whereby the two sections are separable from one another in such a way that the separation may be at least partially interrupted mechanically or upon pressure from the one section, in order to expel the liquid food into the further section for frothing, and
- at least a discharge element (13) at the further section for discharging the frothed food,
**characterised in that**
- the separation is formed such that the liquid food is supplied into the further section in such a manner that it froths.

2. Capsule-type structure according to claim 1, **characterised in that** means are provided in the further section for setting liquid food introduced into the further section into a turbulent flow in such a way that it froths.

3. Structure according to claim 2, **characterised in that** the means is funnel-like and/or cup-shaped, and has flow screens (11, 37), impact cams, etc. along an inner surface for generating the turbulent flow or for frothing the liquid.

4. Structure according to one of the claims 1 to 3, **characterised in that** the one section is easily deformable or compressible and has a discharge opening (7), which is opened automatically by generating a pressure in the container.

5. Capsule-type structure according to one of the claims 1 to 3, **characterised in that** in the one section at least one wall is displaceable by external pressure or pierceable by means of a nozzle in such a way that an increased pressure can be generated in the one section.

6. Capsule-type structure according to one of the claims 1 to 5, **characterised in that** it is a single-use package or a disposable article, which for instance can be produced by means of a deep drawing process.

7. Method for producing an at least partially frothed food by using a capsule-type structure according to one of the claims 1 to 6, such as in particular at least partially frothed milk or a milk product, **characterised in that** the liquid food held in the one section is expelled out of the one section and at least partially frothed without supplying superheated steam such as in particular hot water steam, and at least partially frothed and subsequently discharged by generating an at least partially turbulent flow.

8. Method according to claim 7, **characterised by** heating the section with the liquid food, or the liquid food contained therein, without supplying steam into the container, and subsequently expelling the heated, possibly frothed liquid food, at least partially frothing, and subsequently discharging the at least partially frothed liquid food.

9. Method according to one of the claims 7 or 8, **characterised by** heating the liquid food, such as in particular milk, using microwaves, infrared or the like energy in the one section.

10. Method according to one of the claims 7 to 9, **characterised by** expelling the liquid food out of the one section by means of compressed air, by impression, or by displacing a wall towards the interior of the one section to generate excess pressure, and subsequently possibly performing the frothing in a further section connected to the one section.

11. Method according to one of the claims 7 to 10, **characterised by** introducing the liquid food into a further funnel-like or cup-like section, in such a way that an at least nearly spiral-shaped or circular flow arises, whereby the turbulence occurs due to asymmetrical injection of the liquid food into the further section and/or arranging of a configuration of screens, swirling bodies or the like in the further section.

12. Method according to one of the claims 7 to 11, **characterised by** spraying the liquid food such as in particular milk into the cup-like further section in a sharp jet having a tangential component, whereby a rotating liquid layer such as a milk layer arises, whereby the liquid experiences a first frothing due to the strong turbulence of the incident jet, a coarse-pored and unstable froth being initially formed by this kind of frothing, which is battered upon further passages by the liquid jet, whereby the desired fine-pored stable froth results.

13. Method according to one of the claims 7 to 12, **characterised by** injecting the liquid food into a further section, having different cross-sections in a flow direction of the food for generating a turbulent flow, and possibly supplying air from outside in areas having tapered cross-section to swirl the food.

14. Method according to one of the claims 10 to 13, **characterised by** the frothing occurring in the further section using so-called swirl or twist bodies, which are possibly arranged so as to be freely movable or freely rotatable.

15. Arrangement for performing the method according to one of the claims 7 to 14, for producing an at least partially frothed liquid food, such as in particular milk, comprising:
- a container (1) provided for the storage of a liquid food (3),
- a device (25) for expelling the liquid out of the container,
- a flow device (9) in which the expelled liquid is set into an at least partially turbulent flow, and
- a discharge element (13) for discharging the at least partially frothed food.

16. Arrangement according to claim 15, **characterised in that** the flow device is funnel-like and/or cup-shaped, and has flow screens (11, 37), impact cams, etc. along an inner surface for generating the turbulent flow or for frothing the liquid.

17. Arrangement according to one of the claims 15 or 16, **characterised in that** the container (1), the flow device (9), and the discharge element (13) are integrally connected to form a capsule-type structure which is removably placeable in the arrangement.

18. Coffee machine with an arrangement according to one of the claims 15 to 17.

19. Coffee machine according to claim 18 for making and/or dispensing in particular portioned coffee, in varying forms of consumption, comprising a receptacle for coffee powder or powder in portioned form, a heating device for making hot water, as well as a mixing device for mixing the coffee powder with hot water, and a discharge element for discharging the brewed coffee powder, further **characterised in**:
- a receptacle (21) for arranging the capsule-type structure (20) according to one of the claims 1 to 7, containing liquid milk (3),
- a heating element for heating the milk,
- a device for expelling the milk out of the one section for generating an at least partially turbulent flow of the milk in order to froth the milk or to expel the froth out of the capsule-type structure, and
- possibly a discharge opening (13) for discharging the frothed milk.

## Revendications

1. Formation sous forme de capsule (20) pour générer sans vapeur surchauffée un aliment liquide au moins partiellement moussé, comme particulièrement du lait, avec :
- au moins une région (1) prévue pour le stockage d'un aliment liquide (3),
- au moins une région supplémentaire (9) pour le moussage de l'aliment liquide, les deux régions étant séparables l'une de l'autre de telle sorte que la séparation est interrompable au moins partiellement mécaniquement ou à base de pression dans ladite région, afin d'entraîner l'aliment liquide à être moussé dans la région supplémentaire, et
- au moins un organe de décharge (13) situé à la région supplémentaire pour la déchargement de l'aliment moussé, **caractérisé en ce que**
- la séparation est formée de telle manière que l'aliment liquide est entraîné dans la région supplémentaire de façon à ce qu'il se fait mousser.

2. Formation sous forme de capsule selon la revendication 1, **caractérisée en ce que** des moyens sont prévus dans la région supplémentaire pour mettre l'aliment liquide entraîné à partir de ladite une région dans un courant turbulent de manière qu'il se fait mousser.

3. Formation selon la revendication 2, **caractérisée en ce que** les moyens sont de forme d'entonnoir et/ou de forme de gobelet, comprenant des déflecteurs de courant (11, 37), des cames de rebondissement, etc. le long de la surface intérieure pour générer du courant turbulent et/ou pour faire mousser le liquide.

4. Formation selon une des revendications 1 à 3, **caractérisée en ce que** ladite région est formée de manière aisément déformable ou comprimable et comprend une ouverture de décharge (7), qui est ouverte automatiquement par génération d'une pression dans le récipient.

5. Formation sous forme de capsule selon une des revendications 1 à 3, **caractérisée en ce que**, dans ladite région, au moins une paroi est déplaçable par pression extérieure ou est enfoncable par moyen d'une tuyère de sorte qu'une pression élevée est générable dans ladite région.

6. Formation sous forme de capsule selon une des revendications 1 à 5, **caractérisée en ce qu'**il s'agit d'un emballage d'usage une seule fois ou d'un article jetable, qui est obtenable par exemple par un procédé d'emboutissage profond.

7. Procédé de fabrication d'un aliment au moins partiellement moussé tel que particulièrement du lait ou un produit de lait au moins partiellement moussé, par l'emploi d'une formation sous forme de capsule selon une des revendications 1 à 6, **caractérisé en ce que** l'aliment liquide contenue dans ladite région est expulsé en dehors de ladite région et est au moins partiellement moussé et est ensuite déchargé sans ajout de vapeur surchauffée, comme particulièrement de la vapeur d'eau, par génération d'un courant au moins partiellement turbulent.

8. Procédé selon la revendication 7, **caractérisé en ce que** ladite région avec l'aliment liquide, ou l'aliment liquide contenu là-dedans, est chauffé(e) sans ajouter de vapeur dans le récipient, et subséquemment l'aliment chauffé et éventuellement moussé est expulsé au moins partiellement moussé et est subséquemment dépensé.

9. Procédé selon une des revendications 7 ou 8, **caractérisé en ce que** l'aliment liquide, comme particulièrement le lait, est chauffé dans ladite région par moyen des microondes, de l'infrarouge ou d'autres moyens semblables.

10. Procédé selon une des revendications 7 à 9, **caractérisé en ce que** l'aliment liquide est expulsé de ladite région par moyen d'air comprimé, par enforcement ou déplacement d'une paroi contre l'intérieure de la région afin de générer une surpression, et subséquemment la production éventuelle de la mousse est effectuée dans une région supplémentaire reliée à ladite région.

11. Procédé selon une des revendications 7 à 10, **caractérisé en ce que** l'aliment liquide est distribué dans une région ultérieure de forme d'entonnoir ou de forme de gobelet de telle manière qu'un courant au moins presque spiroïdale ou circulaire se produit, la turbulence étant crée par injection asymétrique de l'aliment liquide et/ou par un agencement de déflecteurs, de dispositifs de tourbillonnement et/ou d'autres choses semblables dans la région ultérieure.

12. Procédé selon une des revendications 7 à 11, **caractérisé en ce que** l'aliment liquide, comme en particulier du lait, est injecté par un jet aigu avec un composant tangentiel dans la région supplémentaire en forme d'entonnoir, par lequel une couche de liquide, telle qu'une couche de lait, en résulte, par lequel le liquide est subi à la première production de mousse par des turbulences fortes du jet arrivant, cette manière de production de mousse produisant initialement une mousse plutôt à grande pores et instable, qui est brisée par le jet de liquide lors des passages supplémentaires, par lesquels la mousse à pores petits et stable est produit.

13. Procédé selon une des revendications 7 à 12, **caractérisé en ce que** l'aliment liquide est injecté dans une région supplémentaire comprenant des coupes transversales différentes en direction du courant des denrées alimentaires pour générer un courant turbulent et qu'éventuellement une ventilation d'air par l'extérieur est effectuée dans des régions avec des sections transversales diminuées pour créer du tourbillonnement de l'aliment.

14. Procédé selon une des revendications 7 à 13, **caractérisé en ce que** la génération de la mousse est établie dans la région supplémentaire par moyen des dispositifs dits de tourbillonnement ou de torsion, qui sont éventuellement agencés libres en mouvement et/ou libres en rotation.

15. Agencement pour la mise en oeuvre du procédé selon une des revendications 7 à 14 pour la génération d'un aliment liquide au moins partiellement moussé, comme en particulier du lait, **caractérisé par**
- un récipient (1), prévu pour le stockage d'un aliment liquide (3),
- un dispositif (25) pour faire expulser le liquide en dehors du récipient,
- un dispositif de courant (9), dans lequel le liquide expulsé est mis en un état au moins partiellement turbulent, et
- un organe de décharge (13) pour décharger l'aliment au moins partiellement sous forme de mousse.

16. Agencement selon la revendication 15, **caractérisé en ce que** le dispositif de courant en forme d'entonnoir et/ou en forme de gobelet comprend des déflecteurs de courant (11, 37), des cames de rebondissement, etc. pour la génération du courant turbulent et/ou pour faire mousser le liquide.

17. Agencement selon une des revendications 15 ou 16, **caractérisé en ce que** le récipient (1), le dispositif de courant (9) ainsi que l'organe de décharge (13) sont intégralement reliés afin de former une formation sous forme de capsule (2), cette formation sous forme de capsule étant plaçable de manière amovible dans l'agencement.

18. Cafetière ayant un agencement selon une des revendications 15 à 17.

19. Cafetière selon la revendication 18 pour la génération et/ou le déchargement en particulier du café portionné, sous formes de consommation diverses, comprenant un réceptacle pour du poudre de café, par exemple du poudre portionné, un dispositif de chauffage pour la génération de l'eau chaude ainsi qu'un dispositif mélangeur pour mélanger le poudre de café avec de l'eau chaude, et un organe de décharge pour décharger le poudre de café échaudé, **caractérisé de plus par**
- un réceptacle (21) pour le posage de la formation sous forme de capsule (20) (3) selon une des revendications 1 à 6, contenant de lait liquide,
- un organe de chauffage pour le chauffage du lait,
- une installation pour le déchargement du lait de ladite région afin de générer un courant de lait au moins partiellement turbulent et pour le faire mousser ou pour décharger la mousse de la formation sous forme de capsule, et
- éventuellement une ouverture de décharge (13) pour la distribution du lait moussé.
